# EUROPÄISCHE PATENTSCHRIFT

(11) **EP 4 473 229 B1**
(45) Veröffentlichungstag und Bekanntmachung des Hinweises auf die Patenterteilung: **03.09.2025**
(21) Anmeldenummer: 23701907.0
(22) Anmeldetag: 23.01.2023
(51) Int. Cl.: F16H 57/12, F16H 1/22, F16H 57/01

(54) **VERFAHREN ZUR ANSTEUERUNG EINES GETRIEBEZAHNRADS**
METHOD FOR CONTROLLING A TRANSMISSION GEARWHEEL
PROCÉDÉ DE COMMANDE D'UNE ROUE DENTÉE DE TRANSMISSION

(30) Priorität: 01.02.2022 AT 500522022
(43) Veröffentlichungstag der Anmeldung: 11.12.2024
(73) Patentinhaber: Taurob GmbH, 1230 Wien (AT); TotalEnergies OneTech, 92400 Courbevoie (FR); Petróleo Brasileiro S.A. Petrobras, Rio de Janeiro, RJ (BR)
(72) Erfinder: HULLER, Norbert, 1020 Wien (AT)
(74) Vertreter: Gibler & Poth Patentanwälte KG
(86) Internationale Anmeldenummer: PCT/EP2023/051525
(87) Internationale Veröffentlichungsnummer: WO 2023/148040

(56) Entgegenhaltungen:
- WO-A1-2011/151887
- DE-A1- 102018 122 538
- JP-A- 2005 186 192
- US-A1- 2006 060 026

## Beschreibung

Die Erfindung betrifft ein Verfahren zur Ansteuerung eines Getriebezahnrads mit einer Regelungseinheit, sowie eine Getriebeeinheit umfassend das Getriebezahnrad und die zur Ansteuerung des Verfahrens ausgebildete Regelungseinheit.

Es ist bekannt, dass ein Getriebe ein Getriebespiel um die Bewegungsachse des Getriebes, aufweisen kann, welches einer präzisen Regelung des Getriebes entgegensteht. Es ist weiters bekannt, dass in Getrieben Motoren verwendet werden, welche eine präzise Ansteuerung des Getriebezahnrads ermöglichen.

Aus der DE 10 2018 122 538 A1 ist eine Getriebeeinheit umfassend eine Regelungseinheit zur Ansteuerung eines Getriebezahnrads bekannt, wobei zumindest zwei Antriebseinheiten mit jeweils wenigstens einem Antriebszahnrad in das Getriebezahnrad eingreifen, wobei jede der zumindest zwei Antriebseinheiten zumindest einen mit dem Antriebszahnrad wirkverbundenen Motor umfasst. Ferner offenbart dieses Dokument ein Verfahren zur Ansteuerung des Getriebezahnrades.

Aus der JP 2005186192 A ist eine Getriebeanordnung für einen Indexiertisch umfassend eine Antriebswelle, ein Träger-Schneckenrad und zwei mit dem Träger-Schneckenrad im Eingriff befindliche Antriebs-Schneckenräder bekannt.

Aus der WO 2011151887 A1 ist eine Getriebeanordnung zur Rotorblattverstellung bei einer Windkraftanlage umfassend ein Getriebezahnrad, zwei Antriebszahnräder und eine Steuerung bekannt.

Aus der US 2006/0060026 A1 ist ein System zum Fernsteuern einer Schusswaffenvorrichtung umfassend ein Getriebezahnrad und zwei Schneckenräder, welche Schneckenräder mit dem Getriebezahnrad in Eingriff stehen, bekannt.

Nachteilig daran ist, dass eine präzise Ansteuerung des Getriebezahnrads oftmals ein sehr geringes Getriebespiel erfordert, welches zu einem erhöhten Verschleiß der Antriebszahnräder und des Getriebezahnrads führt, wodurch derartige Getriebe einen erhöhten Wartungsaufwand aufweisen. Des Weiteren weisen derartige Getriebe oftmals einen ungleichmäßigen Verschleiß an den Antriebszahnrädern auf, wodurch derartige Getriebe nicht autark und ausfallssicher betrieben werden können.

Aufgabe der Erfindung ist es daher ein Verfahren zur Ansteuerung eines Getriebezahnrads mit einer Regelungseinheit der eingangs genannten Art anzugeben, mit welchem die genannten Nachteile vermieden werden können, mit welchem ein Getriebezahnrad und die Antriebszahnräder verschleißarm angesteuert werden können, wodurch die Lebensdauer einer Getriebeeinheit erhöht wird und die Getriebeeinheit ausfallsicher betrieben werden kann.

Erfindungsgemäß wird dies durch die Merkmale des Patentanspruches 1 erreicht.

Dadurch ergibt sich der Vorteil, dass ein Getriebe derart betrieben werden kann, dass das Getriebezahnrad und die Antriebszahnräder der Antriebseinheiten einem möglichst geringen Verschleiß unterliegen, wodurch ein möglichst langer und ausfallssicherer Betrieb des Getriebes bzw. der Getriebeeinheit gewährleistet werden kann. Durch die Regelungseinheit kann insbesondere das Getriebespiel zwischen den Antriebszahnrädern der Antriebseinheiten und dem Getriebezahnrad präzise eingestellt werden, wodurch eine genaue Regelung des Abtriebs bzw. des Getriebezahnrads erreicht werden kann. Mit Hilfe der Bestimmungseinheit kann weiters ein individueller Verschleißparameter für die jeweilige Antriebseinheit bestimmt werden, wodurch die jeweilige Antriebseinheit möglichst verschleißarm betrieben werden kann. Durch die Berücksichtigung der individuellen Verschleißparameter ergibt sich der Vorteil, dass die Wartungsintervalle der Getriebeeinheit verlängert werden können, wodurch das Getriebezahnrad und die Antriebszahnräder gleichermaßen bis zu einer vorgegebenen Verschleißgrenze betrieben werden können, wodurch starre Wartungsintervalle nicht benötigt werden. Dadurch, dass die Regelungseinheit den Verschleißparameter in der Erstellung des individuellen Motorbefehls berücksichtigt, ergibt sich weiters der Vorteil, dass sowohl bei einer präzisen Regelung, als auch bei einer schnellen Regelung des Getriebezahnrads ein möglichst verschleißarmer und ausfallsicherer Betrieb der Getriebeeinheit gewährleistet werden kann. Des Weiteren kann in vorteilhafterweise mit Hilfe des Verschleißparameters ein Fehler im Antrieb, wie beispielsweise ein abgebrochener Zahn am Antriebszahnrad der Antriebseinheit oder des Getriebezahnrads und/oder ein defekter Motor detektiert werden, wobei die Regelungseinheit diesen Fehler bei der Erstellung des individuellen Motorbefehls berücksichtigen kann. Dadurch kann selbst in einer derartigen Situation ein fortlaufender Betrieb des Getriebes garantiert werden. Insbesondere ergibt sich bei der Ansteuerung der Antriebseinheiten mit der Regelungseinheit der Vorteil, dass diese derart angesteuert werden können, dass sich die Querkräfte im Unterschied auf die Abtriebswelle aufheben, wodurch die Abtriebswellenlagerung bei einem gesteigerten Abtriebsdrehmoment nicht höher belastet wird. Dadurch ist die Getriebeeinheit besonders robust gegenüber einem Lastwechsel mit unterschiedlichen Amplituden und unterschiedlichen Frequenzen, weil sich die Getriebeeinrichtung durch die variable Verspannung der Antriebseinheiten mit dem Getriebezahnrad bevorzugt progressiv verhält.

Die Erfindung betrifft weiters eine Getriebeeinheit gemäß dem Patentanspruch 8. Die Erfindung hat daher weiters die Aufgabe eine Getriebeeinheit der eingangs genannten Art anzugeben, mit welcher die genannten Nachteile vermieden werden können, mit welchem ein Getriebezahnrad und die Antriebszahnräder verschleißarm angesteuert werden können, wodurch die Lebensdauer einer Getriebeeinheit erhöht wird und die Getriebeeinheit ausfallsicher betrieben werden kann.

Erfindungsgemäß wird dies durch die Merkmale des Patentanspruches 8 erreicht. Die Vorteile der Getriebeeinheit entsprechen den Vorteilen des oben genannten Verfahrens.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführung des Verfahrens in schematischer Darstellung,
Fig. 2 eine bevorzugte Anordnung des Getriebezahnrads und der jeweiligen Antriebszahnräder in Leerlaufstellung,
Fig. 3 die bevorzugte Anordnung aus Fig.2 in vergrößerter Darstellung,
Fig. 4 eine bevorzugte Anordnung des Getriebezahnrads und der jeweiligen Antriebszahnräder in einer ersten Getriebespielmessstellung,
Fig. 5 eine bevorzugte Anordnung des Getriebezahnrads und der jeweiligen Antriebszahnräder in einer zweiten Getriebespielmessstellung,

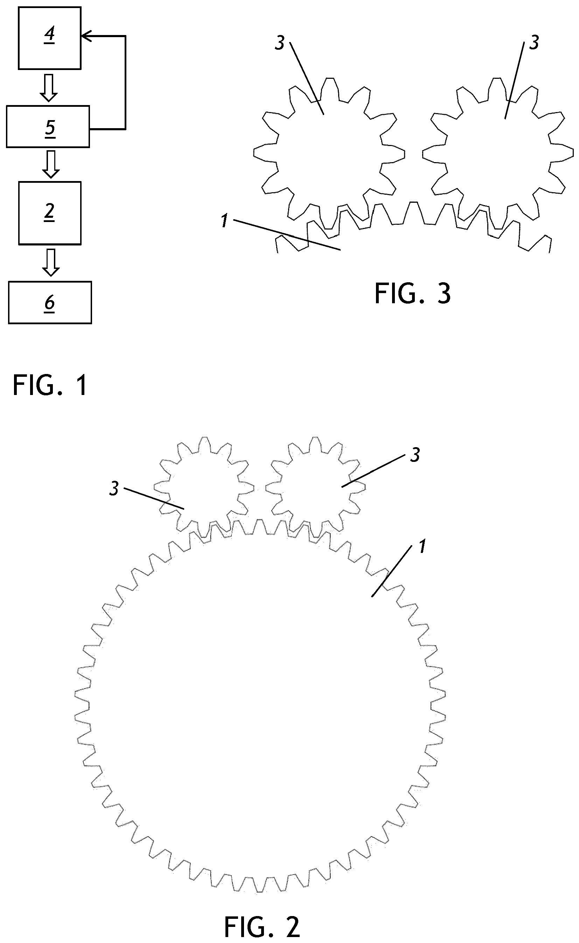

Die Fig. 1 bis 5 zeigen zumindest Teile einer bevorzugten Ausführung eines Verfahrens zur Ansteuerung eines Getriebezahnrads 1, wobei zumindest zwei Antriebseinheiten mit jeweils wenigstens einem Antriebszahnrad 3 in das Getriebezahnrad 1 eingreifen, wobei jede der zumindest zwei Antriebseinheiten zumindest einen mit dem Antriebszahnrad 3 wirkverbundenen Motor umfasst, wobei jeder der zumindest zwei Antriebseinheiten jeweils eine Bestimmungseinheit 4 zugeordnet ist, wobei von jeder der Bestimmungseinheiten 4 für die jeweilige Antriebseinheit ein Verschleißparameter 5 unter Berücksichtigung wenigstens eines zeitlich vorhergehenden Verschleißparameters 5 bestimmt wird, wobei von einer Regelungseinheit 2 für jeden Motor der zumindest zwei Antriebseinheiten ein individueller Motorbefehl 6 unter Berücksichtigung der bestimmten Verschleißparameter 5 erstellt wird, wobei jeder dieser individuellen Motorbefehle 6 ausgangsseitig an den jeweiligen Motor der zumindest zwei Antriebseinheiten ausgegeben wird, wobei das Getriebezahnrad 1 durch die jeweiligen Motoren anhand der individuellen Motorbefehle 6 angetrieben wird.

Es ist weiters eine Getriebeeinheit umfassend eine Regelungseinheit 2 zur Ansteuerung eines Getriebezahnrads 1 vorgesehen, wobei zumindest zwei Antriebseinheiten mit jeweils wenigstens einem Antriebszahnrad 3 in das Getriebezahnrad 1 eingreifen, wobei jede der zumindest zwei Antriebseinheiten zumindest einen mit dem Antriebszahnrad 3 wirkverbundenen Motor umfasst, wobei jeder der zumindest zwei Antriebseinheiten jeweils eine Bestimmungseinheit 4 zugeordnet ist, wobei die Regelungseinheit 2 ausgebildet ist, die Antriebseinheiten nach einem Verfahren nach einem der Ansprüche 1 bis 7 zu betreiben.

Dadurch ergibt sich der Vorteil, dass ein Getriebe derart betrieben werden kann, dass das Getriebezahnrad 1 und die Antriebszahnräder 3 der Antriebseinheiten einem möglichst geringen Verschleiß unterliegen, wodurch ein möglichst langer und ausfallssicherer Betrieb des Getriebes bzw. der Getriebeeinheit gewährleistet werden kann. Durch die Regelungseinheit 2 kann insbesondere das Getriebespiel zwischen den Antriebszahnrädern 3 der Antriebseinheiten und dem Getriebezahnrad 1 präzise eingestellt werden, wodurch eine genaue Regelung des Abtriebs bzw. des Getriebezahnrads 1 erreicht werden kann. Mit Hilfe der Bestimmungseinheit 4 kann weiters ein individueller Verschleißparameter 5 für die jeweilige Antriebseinheit bestimmt werden, wodurch die jeweilige Antriebseinheit möglichst verschleißarm betrieben werden kann. Durch die Berücksichtigung der individuellen Verschleißparameter 5 ergibt sich der Vorteil, dass die Wartungsintervalle der Getriebeeinheit verlängert werden können, wodurch das Getriebezahnrad 1 und die Antriebszahnräder 3 gleichermaßen bis zu einer vorgegebenen Verschleißgrenze betrieben werden können, wodurch starre Wartungsintervalle nicht benötigt werden. Dadurch, dass die Regelungseinheit 2 den Verschleißparameter 5 in der Erstellung des individuellen Motorbefehls 6 berücksichtigt, ergibt sich weiters der Vorteil, dass sowohl bei einer präzisen Regelung, als auch bei einer schnellen Regelung des Getriebezahnrads 1 ein möglichst verschleißarmer und ausfallsicherer Betrieb der Getriebeeinheit gewährleistet werden kann. Des Weiteren kann in vorteilhafter Weise mit Hilfe des Verschleißparameters 5 ein Fehler im Antrieb, wie beispielsweise ein abgebrochener Zahn am Antriebszahnrad 3 der Antriebseinheit oder des Getriebezahnrads 1 und/oder ein defekter Motor detektiert werden, wobei die Regelungseinheit 2 diesen Fehler bei der Erstellung des individuellen Motorbefehls 6 berücksichtigen kann. Dadurch kann selbst in einer derartigen Situation ein fortlaufender Betrieb des Getriebes garantiert werden. Insbesondere ergibt sich bei der Ansteuerung der Antriebseinheiten mit der Regelungseinheit 2 der Vorteil, dass diese derart angesteuert werden können, dass sich die Querkräfte im Unterschied auf die Abtriebswelle aufheben, wodurch die Abtriebswellenlagerung bei einem gesteigerten Abtriebsdrehmoment nicht höher belastet wird. Dadurch ist die Getriebeeinheit besonders robust gegenüber einem Lastwechsel mit unterschiedlichen Amplituden und unterschiedlichen Frequenzen, weil sich die Getriebeeinrichtung durch die variable Verspannung der Antriebseinheiten mit dem Getriebezahnrad 1 bevorzugt progressiv verhält.

Das vorgeschlagene Verfahren bezieht sich auf die Ansteuerung eines Getriebezahnrads 1 mit einer Regelungseinheit 2. Dabei ist vorgesehen, dass das Getriebezahnrad 1 ein Teil eines Getriebes bzw. einer Getriebeeinheit ist. Es ist weiters vorgesehen, dass die Regelungseinheit 2 ein Teil der Getriebeeinheit ist. Die Regelungseinheit 2 kann bevorzugt ein Teil einer elektronischen Vorrichtung, insbesondere eines Computers, sein.

Als Getriebe wird oftmals eine mechanische Vorrichtung bezeichnet, welche zumindest einen Antrieb und zumindest einen Abtrieb aufweist. Dabei wird bevorzugt an dem zumindest einem Antrieb eine Kraft von einer Kraftmaschine, wie beispielsweise einem Motor, eingespeist und an dem zumindest einem Abtrieb eine Arbeitsmaschine oder ein anzutreibendes Element angeschlossen, an welche die von der Kraftmaschine eingespeiste Kraft nach Durchgang durch das Getriebe abgegeben wird. Bevorzugt kann die mechanische Arbeit mit zumindest einer Abtriebswelle an die Arbeitsmaschine abgeben werden. Insbesondere ist der Abtrieb das Getriebezahnrad 1.

Grundsätzlich ist ein Getriebe dafür vorgesehen eine Änderung einer Kraft oder eines Drehmomentes zu bewirken. Das Getriebe umfasst bevorzugt ein Getriebezahnrad 1 und zumindest zwei Antriebszahnräder. Dabei ist beispielsweise bei einem gleichmäßig übersetzten Getriebe vorgesehen, dass eine Eingangsdrehzahl an eine geforderte Ausgangsdrehzahl angepasst wird. Das Verhältnis zwischen Antriebs- und Abtriebsdrehzahl ist dabei die Übersetzung des Getriebes, wobei ein Übersetzungsverhältnis größer Eins auch als Übersetzung ins Langsame oder als Untersetzung bezeichnet wird.

Bei der vorgeschlagenen Getriebeeinheit ist bevorzugt vorgesehen, dass die Getriebeeinheit ein Rädergetriebe, insbesondere ein Übersetzungsgetriebe ins Schnelle und/oder ein Untersetzungsgetriebe ins Langsame, umfasst. Dabei ist vorgesehen, dass zumindest zwei Antriebseinheiten mit jeweils wenigstens einem Antriebszahnrad 3 in das Getriebezahnrad 1 eingreifen. In den Fig. 2 und 3 ist beispielhaft das Eingreifen von zwei Antriebszahnräder 3 in das Getriebezahnrad 1 gezeigt, wobei sich die Antriebseinheiten und das Getriebezahnrad 1 in Leerlaufstellung befinden.

Bevorzugt kann vorgesehen sein, dass zumindest drei, besonders bevorzugt zumindest vier, insbesondere zumindest fünf Antriebseinheiten mit jeweils wenigstens einem Antriebszahnrad 3 in das Getriebezahnrad 1 eingreifen. Dadurch ergibt sich der Vorteil, dass eine flexible Ansteuerung des Getriebezahnrades 1 erreicht werden kann, wobei das von den jeweiligen Antriebseinheiten auf das Getriebezahnrad 1 aufzubringenden Gesamtdrehmoment besonders vorteilhaft auf die Antriebseinheiten verteilt werden kann.

Eine Antriebseinheit umfasst dabei vorzugsweise wenigstens ein Antriebszahnrad 3 und zumindest einen mit dem Antriebszahnrad 3 wirkverbundenen Motor. Die Antriebszahnräder 3 der Antriebseinheiten sind dafür vorgesehen ein Antriebsdrehmoment auf das Getriebezahnrad 1 auszuüben, wodurch das Getriebezahnrad 1 angetrieben wird. Insbesondere ergibt sich das Abtriebsdrehmoment des Getriebezahnrads 1 durch die aufgebrachten Antriebsdrehmomente der zumindest zwei Antriebseinheiten.

Insbesondere können die zumindest zwei Antriebseinheiten beliebig angeordnet werden.

Bevorzugt kann das wenigstens eine Antriebszahnrad 3 der jeweiligen Antriebseinheit an beliebigen Stellen in das Getriebezahnrad 1 eingreifen.

Die Getriebeeinheit umfasst bevorzugt ein Getriebezahnrad 1, zumindest zwei Antriebseinheiten und eine Regelungseinheit 2.Das Antriebszahnrad 3 und/oder das Getriebezahnrad 1 kann insbesondere ein Wälzrad und/oder ein Schraubrad sein. Bevorzugt kann das Wälzrad und/oder das Schraubrad eine Geradverzahnung und/oder eine Schrägverzahnung und/oder eine Bogenverzahnung aufweisen. Weiters kann das Antriebszahnrad 3 und/oder das Getriebezahnrad 1 ein Kettenrad, wie beispielsweise ein Stirnrad und/oder eine Schnecke und/oder ein Schneckenrad und/oder ein Kegelrad und/oder ein Hypoidrad und/oder ein Ellipsenrad und/oder ein Kronenrad sein.

Insbesondere können das Antriebszahnrad 3 und/oder das Getriebezahnrad 1 verschiedene Zahnflankenformen aufweisen. Beispielsweise kann das Antriebszahnrad 3 und/oder das Getriebezahnrad 1 eine Evolventenverzahnung und/oder eine Zykloidenverzahnung und/oder eine Triebstockverzahnung und/oder eine Wildhaber-Novikov-Verzahnung aufweisen.

Ein Motor ist bevorzugt eine Kraftmaschine. Insbesondere kann vorgesehen sein, dass die Antriebseinheiten derart angeordnet sind, sodass sich Querkräfte im Unterschied auf die Abtriebswelle, insbesondere auf das Getriebezahnrad 1, aufheben. Dadurch kann insbesondere durch ein Hinzufügen einer Antriebseinheit das Getriebeausgangsmoment bzw. das Abtriebsdrehmoment ohne einer Geometrieänderung des Getriebezahnrads 1 erhöht werden.

Insbesondere heben sich die Querkräfte im Unterschied auf die Abtriebswelle bei einer symmetrischen Anordnung der Antriebseinheiten auf.

Bevorzugt heben sich die Querkräfte im Unterschied auf die Abtriebswelle auf, wenn das Getriebezahnrad 1 derart angesteuert wird, dass sich die Summe der von den Antriebseinheiten auf das Getriebezahnrad 1 aufgebrachten Kräfte ausgleichen.

Insbesondere ist der Motor ein Elektromotor, besonders bevorzugt ein Drehstrommotor.

Besonders bevorzugt weist der Elektromotor eine hohe Polpaaranzahl auf.

Insbesondere kann vorgesehen sein, dass die jeweilige Antriebseinheit ein Antriebsgetriebe umfasst, welches zwischen dem zumindest einen wirkverbundenen Motor der jeweiligen Antriebseinheit und dem jeweiligen Antriebszahnrad 3 angeordnet ist. Besonders bevorzugt weist das Antriebsgetriebe der jeweiligen Antriebseinheit eine Übersetzung ins Langsame auf. Dadurch ergibt sich der Vorteil, dass eine genauere Auflösung der Position des Rotors erreicht werden kann. Weiters kann dadurch das Getriebespiel genaue gemessen werden.

Bevorzugt kann vorgesehen sein, dass das Getriebezahnrad 1 einen größeren Raddurchmesser als die in das Getriebezahnrad 1 eingreifenden Antriebszahnräder 3 aufweist.

Alternativ kann vorsehen sein, dass das Getriebezahnrad 1 einen kleineren Raddurchmesser als die in das Getriebezahnrad 1 eingreifenden Antriebszahnräder 3 aufweist.

Als weitere Alternative kann vorgesehen sein, dass die Antriebszahnräder 3 der zumindest zwei Antriebseinheiten unterschiedliche Raddurchmesser aufweisen.

Als weitere Alternative kann vorgesehen sein, dass die Antriebszahnräder 3 der zumindest zwei Antriebseinheiten und das Getriebezahnrad 1 jeweils unterschiedliche Raddurchmesser aufweisen.

Der Raddurchmesser des Getriebezahnrads 1 und/oder des jeweiligen Antriebszahnrads 3 kann insbesondere der Fußkreisdurchmesser, der Teilkreisdurchmesser und/oder der Kopfkreisdurchmesser sein.

Insbesondere kann vorgesehen sein, dass die Zahnradform des Getriebezahnrads 1 und/oder des jeweiligen Antriebszahnrads 3 in Abhängigkeit von der Profilverschiebung gesetzt wird. Insbesondere kann die Profilverschiebung eine positive oder eine negative Verschiebung sein. Dadurch ergibt sich der Vorteil, dass die Tragfähigkeit der Zahnräder optimiert werden kann bzw. das Antriebszahnrad 3 und/oder das Getriebezahnrad 1 auch mit weniger Zähnen ausgeführt werden kann.

Insbesondere kann vorgesehen sein, dass das Getriebezahnrad 1 und/oder das jeweilige Antriebszahnrad 3 unterschiedliche Festigkeiten aufweisen. Dadurch ergibt sich der Vorteil, dass die Belastungen auf das Getriebezahnrad 1 und/oder auf das jeweilige Antriebszahnrad 3 optimiert werden können.

Bevorzugt kann vorgesehen sein, dass das Getriebezahnrad 1 und/oder das Antriebszahnrad 3 der jeweiligen Antriebseinheit aus einem Metall, insbesondere aus einer Metalllegierung, besteht.

Bevorzugt kann vorgesehen sein, dass das Getriebezahnrad 1 und/oder das Antriebszahnrad 3 der jeweiligen Antriebseinheit mittels eines Sinterverfahrens hergestellt wurde.

Bevorzugt kann vorgesehen sein, dass der Modul des Getriebezahnrads 1 und des Antriebszahnrads 3 der jeweiligen Antriebseinheit gleich ist.

Insbesondere kann der Modul der Nennmodul und/oder der Normalmodul sein.

Bevorzugt kann vorgesehen sein, dass mindestens zwei Zähne des Antriebszahnrads 3 der jeweiligen Antriebseinheit in das Getriebezahnrad 1 eingreifen. Dies ist auch unter Profilüberdeckung bekannt, wobei für eine gleichmäßige Kraft- und Bewegungsübertragung insbesondere vorgesehen ist, dass bereits ein neuer Zahn des jeweiligen Antriebszahnrads 3 mit einem Zahn des Getriebezahnrads 1 im Eingriff steht, wenn der vorhergehende Zahn des jeweiligen Antriebszahnrads 3 außer Eingriff kommt. Dadurch ergibt sich der Vorteil, dass ein besonders laufruhiger Betrieb des Getriebes erreicht werden kann, wobei das von der jeweiligen Antriebseinheit auf das Getriebezahnrad 1 zu übertragende Drehmoment erhöht werden kann, da sich das zu übertragende Drehmoment auf die im Eingriff stehenden Zähne aufteilt. Weiters kann dadurch ein Sperren des Getriebes verhindert werden.

Bei dem vorgeschlagenen Verfahren ist vorgesehen, dass jeder der zumindest zwei Antriebseinheiten jeweils eine Bestimmungseinheit 4 zugeordnet ist. Bevorzugt kann die jeweilige Bestimmungseinheit 4 Teil der elektronischen Vorrichtung, insbesondere des Computers, sein. Insbesondere umfasst die Getriebeeinheit die Bestimmungseinheit 4.

Wie in Fig. 1 ersichtlich ist, ist die Bestimmungseinheit 4 dazu vorgesehen für die jeweilige Antriebseinheit einen Verschleißparameter 5 unter Berücksichtigung wenigstens eines zeitlich vorhergehenden Verschleißparameters 5 zu bestimmen. Nachdem bei der Bestimmung des ersten Verschleißparameters 5 kein zeitlich vorhergehender Verschleißparameter 5 vorliegt, kann insbesondere vorgesehen sein, dass bei der Bestimmung des ersten Verschleißparameters 5 ein vordefinierter Verschleißparameter 5 bei der Bestimmung des ersten Verschleißparameters 5 von der Bestimmungseinheit 4 berücksichtigt wird. Der vordefinierte Verschleißparameter 5 kann insbesondere vor der Auslieferung der Getriebeeinheit in der elektronischen Vorrichtung, insbesondere in einem Speicher des Computers, abgespeichert worden sein. Insbesondere kann der vordefinierte Verschleißparameter 5 von dem Hersteller der Antriebszahnräder 3 oder des Getriebezahnrades 1 definiert werden.

Bevorzugt kann der zeitlich vorhergehende Verschleißparameter 5 der unmittelbar vorhergegangene Verschleißparameter 5 sein.

Bevorzugt kann der zeitlich vorhergehende Verschleißparameter 5 aus den letzten fünf, besonders bevorzugt letzten 10, insbesondere letzten 20 bestimmten Verschleißparametern 5 gewählt werden. Bevorzugt kann der zeitlich vorhergehende Verschleißparameter 5 aus einem gewissen Zeitintervall gewählt werden, wobei in dem gewissen Zeitintervall von jeder der Bestimmungseinheiten 4 für die jeweilige Antriebseinheit Verschleißparameter 5 bestimmt wurden. Insbesondere kann das Zeitintervall Stunden, Tage, Monate und/oder Jahre umfassen.

Insbesondere kann vorgesehen sein, dass von jeder der Bestimmungseinheiten 4 für die jeweilige Antriebseinheit der Verschleißparameter 5 unter Berücksichtigung wenigstens eines zeitlich vorhergehenden Verschleißparameters 5 der jeweiligen Antriebseinheit bestimmt wird.

Insbesondere kann vorgesehen sein, dass der von der jeweiligen Bestimmungseinheit 4 bestimmte Verschleißparameter 5 in dem Speicher der elektronischen Vorrichtung, insbesondere in den Speicher des Computers, abgespeichert wird. Insbesondere kann der Verschleißparameter 5 in einer Datenstruktur in dem Speicher abgespeichert werden. Dadurch ergibt sich der Vorteil, dass die Verschleißparameter 5 der jeweiligen Antriebseinheiten auch zur Auswertung verwendet werden können, weil eine Historie der Verschleißparameter 5 vorliegt, wodurch Verbesserungen in der Regelung der Antriebseinheiten, beispielsweise durch einen selbstlernenden Algorithmus, erreicht werden können.

Es ist vorgesehen, dass von der Regelungseinheit 2 für jeden Motor der zumindest zwei Antriebseinheiten ein individueller Motorbefehl 6 unter Berücksichtigung der bestimmten Verschleißparameter 5 erstellt wird, wie dies bevorzugt in Fig. 1 in schematischer Darstellung dargestellt ist. Dabei wird der individuelle Motorbefehl 6 bevorzugt an die Verschleißsituation zwischen dem Getriebezahnrad 1 und dem jeweiligen Antriebszahnrad 3 angepasst.

Insbesondere kann vorgesehen sein, dass bei einer ungleich starken Abnutzung der jeweiligen Antriebszahnräder 3 der individuelle Motorbefehl 6 das auf das Getriebezahnrad 1 aufzubringende Gesamtdrehmoment derart auf die Antriebseinheiten aufteilt, dass ein Großteil des Gesamtdrehmoments von dem weniger stark abgenutzten Antriebszahnrad 3 aufgebracht wird.

Weiters kann bevorzugt vorgesehen sein, dass eine Beschädigung eines oder mehrerer Zähne des Getriebezahnrads 1 und/oder des jeweiligen Antriebszahnrads 3 bei der Bestimmung des individuellen Motorbefehls 6 berücksichtigt wird. Dabei kann beispielsweise bei einem Eingreifen eines Antriebszahnrads 3 in einen abgebrochenen oder defekten Zahn des Getriebezahnrads 1, wodurch das aufzubringende Abtriebsdrehmoment bzw. das von dieser Antriebseinheit auf das Getriebezahnrad 1 aufzubringende Drehmoment nicht erreicht werden kann, durch ein stärker aufzubringendes Drehmoment wenigstens einer weiteren Antriebseinheit ausgeglichen werden.

Bevorzugt kann vorgesehen sein, dass jede der zumindest zwei Antriebseinheiten zumindest einen Sensor umfasst, wobei mit dem zumindest einen Sensor der Getriebespielwert zwischen dem jeweiligen Antriebszahnrad 3 und dem Getriebezahnrad 1 gemessen wird, wobei von der Bestimmungseinheit 4 für die jeweilige Antriebseinheit der Verschleißparameter 5 unter Berücksichtigung des Getriebespielwerts bestimmt wird. Dadurch ergibt sich der Vorteil, dass das Getriebespiel genau bestimmt werden kann, wodurch das über die jeweilige Antriebseinheit an das Getriebezahnrad 1 übertragende Antriebsmoment genau bestimmt werden kann. Dadurch können bevorzugt unterschiedliche Verschleißverhältnisse zwischen den zumindest zwei Antriebseinheiten derart berücksichtigt werden, sodass sich die Verschleißverhältnisse bzw. die Verschleißparameter 5 der zumindest zwei Antriebseinheiten gegenseitig angleichen. Dadurch können die Antriebszahnräder 3 bevorzugt bis zu einer vordefinierten Verschleißgrenze betrieben werden, wodurch ein Auswechseln der Antriebszahnräder 3 gleichzeitig erfolgen kann und ein nachhaltiger Betrieb der Getriebeeinheit sichergestellt werden kann.

Der Sensor kann bevorzugt ein Positionssensor sein, welcher die Stellung des Getriebezahnrads 1 und des jeweiligen Antriebszahnrads 3 misst und den gemessenen Messwert in einer Datenbank der Bestimmungseinheit 4 abspeichert. Dabei kann insbesondere in der Datenbank der Bestimmungseinheit 4 vermerkt sein, welcher Zahn der jeweiligen Antriebseinheit mit welchem Zahn des Getriebezahnrads 1 in Kontakt gekommen ist.

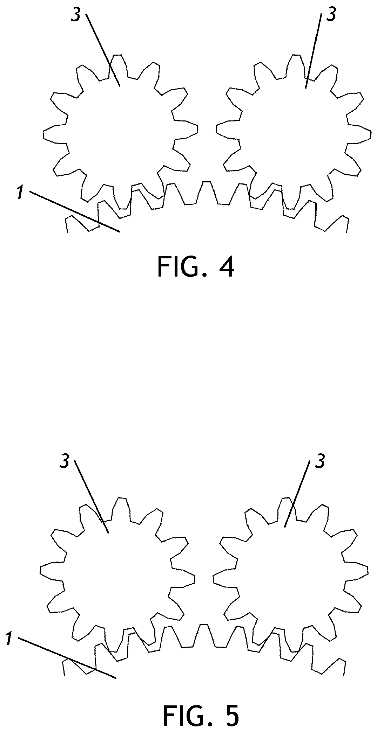

Bevorzugt kann der Sensor das Getriebespiel nach einem vorgegebenen Getriebespielmessverfahren messen. Beispielsweise kann bei dem Getriebespielmessverfahren, welches mit zwei Antriebseinheiten durchgeführt wird, vorgesehen sein, dass das Getriebezahnrad 1 mit den zwei Antriebseinheiten in zwei Getriebespielmessstellungen verklemmt wird. Dabei werden die zwei Antriebszahnräder 3 bevorzugt in entgegengesetzte Richtungen angetrieben, wodurch die zwei Antriebszahnräder 3 in die zwei Getriebespielmessstellungen gebracht werden. Dabei werden in einer ersten Getriebespielmessstellung, wie in Fig. 4 gezeigt, zwei gegenseitig zugewandte Flanken der Antriebszahnräder 3 mit den Flanken den Getriebezahnrads 1 verklemmt, wobei in der zweiten Getriebespielmessstellung, wie in Fig. 5 gezeigt, zwei gegenseitig abgewandte Flanken der Antriebszahnrädern 3 mit den Flanken des Getriebezahnrads 1 verklemmt werden. Dabei ist bevorzugt der am Umfang der Antriebszahnräder 3 zurückgelegte Weg zwischen der ersten und der zweiten Getriebespielmessstellung ein Maß für das Getriebespiel des Getriebes. Besonders bevorzugt kann auch der Winkel zwischen der ersten und der zweiten Getriebespielmessstellung eines Antriebszahnrads 3 zur Bestimmung des Getriebespiels dieses Antriebszahnrads 3 verwendet werden. Dabei wird der Winkel bevorzugt zwischen zwei Tangenten der zwei Getriebespielmessstellungen gemessen, wobei die jeweilige Tangente von dem Antriebszahnradmittelpunkt bis zu dem in das Getriebezahnrad 1 eingreifenden Zahn gezogen wird.

Des Weiteren kann das Getriebespiel beispielsweise bei drei Antriebseinheiten folgendermaßen gemessen werden, indem das Getriebezahnrad 1 bevorzugt durch zwei Antriebszahnräder 3 verklemmt wird, wodurch dieses unbeweglich gehalten wird. Darauffolgend wird das dritte Antriebszahnrad 3 bevorzugt derart angesteuert, dass zwei Flanken eines Zahnes des dritten Antriebszahnrad 3 mit den jeweiligen Flanken des Getriebezahnrads 1 kontaktiert werden, wobei das Getriebespiel bevorzugt durch den Winkel zwischen den beiden Endpositionen ausgebildet wird, wobei bei den beiden Endpositionen die jeweiligen Flanken des dritten Antriebszahnrads 3 mit den Flanken des Getriebezahnrads 1 formschlüssig aneinander gepresst werden.

Besonders bevorzugt kann vorgesehen sein, dass das Getriebespielmessverfahren nach einem vordefinierten Zeitintervall durchgeführt wird. Insbesondere kann das vordefinierte Zeitintervall eine bestimmte Abfolge von Tagen und/oder Monaten umfassen. Besonders bevorzugt kann das Getriebespielmessverfahren nach bestimmten Zyklen und/oder Belastungen der Antriebseinheiten durchgeführt werden.

Insbesondere kann das Getriebespielmessverfahren für jeden Zahn des jeweiligen Antriebszahnrads 3 und/oder des Getriebezahnrads 1 durchgeführt werden.

Besonders bevorzugt kann das Getriebespielmessverfahren immer in einer gleichen Konstellation des Getriebezahnrads 1 und des jeweiligen Antriebszahnrads 3 durchgeführt werden. Eine gleiche Konstellation des Getriebezahnrads 1 und des Antriebszahnrads 3 liegt insbesondere dann vor, wenn bei jedem Getriebespielmessverfahren dieselben Zähne des jeweiligen Antriebszahnrads 3 in dieselben Zahnradlücken des Getriebezahnrads 1 eingreifen. Dies bedeutet jedoch nicht, dass das Getriebespielmessverfahren nur in einer einzigen Konstellation von Getriebezahnrad 1 und Antriebszahnrad 3 durchgeführt werden muss. Insbesondere kann das Getriebespielmessverfahren für verschiedene Konstellationen von Getriebezahnrad 1 und Antriebszahnrad 3 durchgeführt werden.

Bevorzugt kann vorgesehen sein, dass von der Bestimmungseinheit 4 für die jeweilige Antriebseinheit der Verschleißparameter 5 unter Berücksichtigung wenigstens eines zusätzlichen zeitlich vorhergehenden Getriebespielwerts bestimmt wird. Dadurch ergibt sich der Vorteil, dass der Verschleißparameter 5 besonders genau bestimmt werden kann, weil auch eine Historie der jeweiligen Antriebseinheit bei der Bestimmung des Verschleißparameters 5 berücksichtigt werden kann.

Bevorzugt kann vorgesehen sein, dass von der Bestimmungseinheit 4 für die jeweilige Antriebseinheit der Verschleißparameter 5 unter Berücksichtigung wenigstens eines zusätzlichen zeitlich vorhergehenden Getriebespielwerts der jeweiligen Antriebseinheit bestimmt wird.

Besonders bevorzugt kann der wenigstens eine zeitlich vorhergehende Getriebespielwert von dem Speicher der elektronischen Vorrichtung, insbesondere des Computers, geladen werden.

Bevorzugt kann vorgesehen sein, dass von der Bestimmungseinheit 4 für die jeweilige Antriebseinheit der Verschleißparameter 5 unter Berücksichtigung zumindest eines Leistungsmerkmals des jeweiligen Motors bestimmt wird. Dadurch ergibt sich der Vorteil, dass keine Messung des Verschleißparameters 5 benötigt wird, sondern der Verschleißparameter 5 anhand eines Models bestimmt werden kann. Insbesondere kann als Model die lineare Schadensakkumulation, welche auch "Miner's Rule" genannt wird, verwendet werden.

Das Leistungsmerkmal eines Motors kann insbesondere das von der Antriebseinheit auf das Getriebezahnrad 1 aufzubringende Drehmoment und/oder die Drehzahl des Antriebszahnrads 3 sein.

Bevorzugt kann vorgesehen sein, dass von der Bestimmungseinheit 4 für die jeweilige Antriebseinheit der Verschleißparameter 5 unter Berücksichtigung wenigstens eines zusätzlichen zeitlich vorhergehenden Leistungsmerkmals des jeweiligen Motors bestimmt wird. Dadurch ergibt sich der Vorteil, dass der für die jeweilige Antriebseinheit bestimmte Verschleißparamater 5 möglichst genau bestimmt werden kann, nachdem auch eine Historie bei der Bestimmung des Verschleißparameters 5 berücksichtigt werden kann.

Bevorzugt kann vorgesehen sein, dass von der Bestimmungseinheit 4 für die jeweilige Antriebseinheit der Verschleißparameter 5 unter Berücksichtigung wenigstens eines Lastkollektivs der zumindest zwei Antriebseinheiten bestimmt wird. Dadurch ergibt sich der Vorteil, dass der Verschleißparameter 5 von der Bestimmungseinheit 4 sehr einfach bestimmt werden kann, wobei durch das Lastkollektiv auch eine Historie der jeweiligen Antriebseinheit bei der Bestimmung des Verschleißparameters 5 berücksichtigt werden kann. Insbesondere kann das Lastkollektiv auch zur Ansteuerung der jeweiligen Antriebseinheit durch einen selbstlernen Algorithmus verwendet werden, wodurch der Verschleiß der jeweiligen Antriebseinheit optimiert werden kann.

Bevorzugt kann vorgesehen sein, dass von der Bestimmungseinheit 4 für die jeweilige Antriebseinheit der Verschleißparameter 5 unter Berücksichtigung wenigstens eines Spannungskollektivs der zumindest zwei Antriebseinheiten bestimmt wird.

Besonders bevorzugt wird der wenigstens eine Spannungskollektiv der jeweiligen Antriebseinheit aus dem wenigstens einem Lastkollektiv der jeweiligen Antriebseinheit bestimmt.

Insbesondere kann vorgesehen sein, dass für die jeweilige Antriebseinheit der wenigstens eine Lastkollektiv für jeden Zahn des jeweiligen Antriebszahnrads 3 bestimmt wird.

Insbesondere kann bei dem Model, insbesondere bei der linearen Schadensakkumulation, der Einfluss des Lastkollektivs bei der Berechnung der verbleibenden Lebensdauer bzw. des Verschleißes der jeweiligen Antriebseinheit berücksichtigt werden.

Ein Lastkollektiv kann insbesondere auch als Beanspruchungskollektiv bezeichnet werden, wobei in einem Datensatz die Beanspruchung eines Bauteils oder einer Maschine in einem gewissen Zeitraum abgebildet wird.

Besonders bevorzugt kann das Lastkollektiv von der Bestimmungseinheit 4 aus dem von der Antriebseinheit auf das Getriebezahnrad 1 aufgebrachte Drehmoment berechnet werden.

Insbesondere kann vorgesehen sein, dass das berechnete Lastkollektiv in dem Speicher der elektronischen Vorrichtung, insbesondere des Computers, abgespeichert wird.

Besonders bevorzugt kann vorgesehen sein, dass bei einer genauen Ansteuerung des Getriebezahnrads 1 mit zwei Antriebseinheiten, lediglich eine erste Antriebseinheit das vom Getriebezahnrad 1 aufzubringende Abtriebsdrehmoment auf das Getriebezahnrad 1 aufbringt, wobei eine zweite Antriebseinheit ein kleineres Drehmoment in Gegenrichtung der ersten Antriebseinheit auf das Getriebezahnrad 1 aufbringt, wodurch kein Getriebespiel zwischen den beiden Antriebseinheiten und dem Getriebezahnrad 1 ausgebildet wird. Dabei kann besonders bevorzugt ein ungleicher Verschleiß der Antriebszahnräder 3 und des Getriebezahnrads 1 verhindert werden, wenn nach Überschreitung einer vordefinierten Grenze im Lastkollektiv der stärker verschlissenen Antriebseinheit die Rollen der zwei Antriebseinheiten getauscht werden. Dadurch ergibt sich der Vorteil, dass das Getriebe für sehr präzise Ansteuerungen verwendet werden kann, weil kein Getriebespiel zwischen den Antriebseinheiten und dem Getriebezahnrad 1 ausgebildet wird und dennoch ein gleichmäßiger Verschleiß der Antriebszahnräder 3 und des Getriebezahnrads 1 gewährleistet wird.

Besonders bevorzugt kann vorgesehen sein, dass von der Bestimmungseinheit 4 für die jeweilige Antriebseinheit der Verschleißparameter 5 für jeden Zahn des jeweilige Antriebszahnrads 3 bestimmt wird. Dadurch ergibt sich der Vorteil, dass der Verschleiß der jeweiligen Antriebseinheit besonders genau bestimmt werden kann, wobei auch ein abgebrochener Zahn leicht und schnell detektiert werden kann, wodurch die Regelungseinheit 2 den abgebrochenen Zahn bei der Erstellung des individuellen Motorbefehls 6 berücksichtigen kann.

Bevorzugt kann vorgesehen sein, dass der individuelle Motorbefehl 6 von der Regelungseinheit 2 derart erstellt wird, dass eine Abweichung der Verschleißparameter 5 der Antriebseinheiten innerhalb eines vorgegebenen Wertebereichs bleibt. Dadurch ergibt sich insbesondere der Vorteil, dass ein gleichmäßiger Verschleiß zwischen den Antriebseinheiten sichergestellt werden kann, wodurch eine Getriebeeinheit nachhaltig betrieben werden kann. Weiters ergibt sich dadurch der Vorteil, dass Wartungsintervalle der Getriebeeinrichtung verlängert werden können, wodurch auch Kosten gespart werden können, weil ein unterbrechungsfreier Betrieb der Getriebeeinheit ermöglicht werden kann.

Bevorzugt kann vorgesehen sein, dass der Wertebereich eine Abweichung der Verschleißparameter 5 der Antriebseinheiten von 4%, besonders bevorzugt 17%, insbesondere 50%, umfasst.

Insbesondere kann vorgesehen sein, dass der individuelle Motorbefehl 6 von der Regelungseinheit 2 derart erstellt wird, dass ein Auslastungsgrad der jeweiligen Antriebseinheit berücksichtigt wird.

Insbesondere kann der Verschleißparameter 5 der Antriebseinheiten indirekt proportional abhängig zum Auslastungsgrad sein.

Besonders bevorzugt kann vorgesehen sein, dass die Regelungseinheit 2 einen Ansteuerungsmodus bei der Erstellung des individuellen Motorbefehls 6 berücksichtigt. Dadurch ergibt sich der Vorteil, dass mittels der Regelungseinheit 2 zwischen verschiedenen Betriebsmoden gewechselt werden kann, wodurch insbesondere das Getriebespiel schnell und einfach an den jeweiligen Betriebsmodus angepasst werden kann. Dadurch kann bei einer schnellen Regelung des Getriebezahnrads 1 das Getriebespiel vergrößert werden, wodurch ein möglichst schneller und verschleißarmer Betrieb des Getriebes sichergestellt wird. Dadurch kann bei einer präzisen Regelung des Getriebezahnrads 1, wobei bevorzugt ein möglichst kleines Getriebespiel erwünscht ist, dieses ebenfalls an die jeweilige Verschleißsituation der Antriebseinheiten angepasst werden. Dadurch kann ein Unterschied zwischen einer schnellen Regelung des Getriebezahnrads 1 mit einem Antriebszahnrad 3, welches Antriebszahnrad 3 wenigstens einen Zahnbruch aufweist, gegenüber einer präzisen Regelung des Getriebezahnrads 1 bei der Erstellung des individuellen Motorbefehls 6 gemacht werden, nachdem bei der präzisen Regelung des Getriebezahnrads 1 im Zuge des Ansteuerungsprozesses der wenigstens eine Zahnbruch wahrscheinlich eine größere Auswirkung auf die Ansteuerung ausübt.

Insbesondere kann der Ansteuerungsmodus einen Ausfallsicherheitsmodus umfassen. Insbesondere kann der Ausfallsicherheitsmodus wenigstens einen Ausfall und/oder Defekt wenigstens einer Antriebseinheit umfassen.

Insbesondere kann vorgesehen sein, dass in dem Ausfallssicherheitsmodus die wenigstens eine ausgefallene Antriebseinheit durch die restlichen funktionstüchtigen Antriebseinheiten ersetzt wird. Dadurch kann beispielsweise ein vorgegebenes Abtriebsdrehmoment durch die restlichen Antriebseinheiten aufgebracht werden, wenn die Leistung der restlichen Antriebseinheiten dies zulässt. Wenn das vorgegebene Abtriebsdrehmoment durch die restlichen Antriebseinheiten nicht aufgebracht werden kann, kann insbesondere vorgesehen sein, dass von der Regelungseinheit 2 das maximal aufzubringende Abtriebsdrehmoment der restlichen funktionstüchtigen Antriebseinheiten bei der Erstellung des individuellen Motorbefehls 6 berücksichtigt wird.

Insbesondere kann vorgesehen sein, dass in dem Ausfallssicherheitsmodus die Regelungseinheit 2 bei der Erstellung des individuellen Motorbefehls 6 für die wenigstens eine defekte Antriebseinheit eine Reduzierung des auf das Getriebezahnrad 1 aufzubringenden Drehmoments vorsieht. Bevorzugt kann vorgesehen sein, dass von der Regelungseinheit 2 der individuelle Motorbefehl 6 für die funktionstüchtigen Antriebseinheiten derart erstellt wird, dass ein vorgegebenes Abtriebsdrehmoment bei hinreichender Leistung der restlichen funktionstüchtigen Antriebseinheiten erreicht werden kann.

Bevorzugt kann vorgesehen sein, dass der Verschleißparameter 5 der jeweiligen Antriebseinheit über eine weitere elektronische Vorrichtung abrufbar ist.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Verfahren zur Ansteuerung eines Getriebezahnrads (1), wobei zumindest zwei Antriebseinheiten mit jeweils wenigstens einem Antriebszahnrad (3) in das Getriebezahnrad (1) eingreifen, wobei jede der zumindest zwei Antriebseinheiten zumindest einen mit dem Antriebszahnrad (3) wirkverbundenen Motor umfasst, wobei jeder der zumindest zwei Antriebseinheiten jeweils eine Bestimmungseinheit (4) zugeordnet ist, wobei von jeder der Bestimmungseinheiten (4) für die jeweilige Antriebseinheit ein Verschleißparameter (5) unter Berücksichtigung wenigstens eines zeitlich vorhergehenden Verschleißparameters (5) bestimmt wird, wobei von einer Regelungseinheit (2) für jeden Motor der zumindest zwei Antriebseinheiten ein individueller Motorbefehl (6) unter Berücksichtigung der bestimmten Verschleißparameter (5) erstellt wird, wobei jeder dieser individuellen Motorbefehle (6) ausgangsseitig an den jeweiligen Motor der zumindest zwei Antriebseinheiten ausgegeben wird, wobei das Getriebezahnrad (1) durch die jeweiligen Motoren anhand der individuellen Motorbefehle (6) angetrieben wird.

2. Verfahren nach Anspruch 1, **dadurch gekennzeichnet, dass** jede der zumindest zwei Antriebseinheiten zumindest einen Sensor umfasst, wobei mit dem zumindest einen Sensor der Getriebespielwert zwischen dem jeweiligen Antriebszahnrad (3) und dem Getriebezahnrad (1) gemessen wird, wobei von der Bestimmungseinheit (4) für die jeweilige Antriebseinheit der Verschleißparameter (5) unter Berücksichtigung des Getriebespielwerts bestimmt wird.

3. Verfahren nach Anspruch 2, **dadurch gekennzeichnet, dass** von der Bestimmungseinheit (4) für die jeweilige Antriebseinheit der Verschleißparameter (5) unter Berücksichtigung wenigstens eines zusätzlichen zeitlich vorhergehenden Getriebespielwerts bestimmt wird.

4. Verfahren nach einem der Ansprüche 1 bis 3, **dadurch gekennzeichnet, dass** von der Bestimmungseinheit (4) für die jeweilige Antriebseinheit der Verschleißparameter (5) unter Berücksichtigung zumindest eines Leistungsmerkmals des jeweiligen Motors bestimmt wird.

5. Verfahren nach Anspruch 4, **dadurch gekennzeichnet, dass** von der Bestimmungseinheit (4) für die jeweilige Antriebseinheit der Verschleißparameter (5) unter Berücksichtigung wenigstens eines zusätzlichen zeitlich vorhergehenden Leistungsmerkmals des jeweiligen Motors bestimmt wird.

6. Verfahren nach einem der Ansprüche 1 bis 5, **dadurch gekennzeichnet, dass** von der Bestimmungseinheit (4) für die jeweilige Antriebseinheit der Verschleißparameter (5) unter Berücksichtigung wenigstens eines Lastkollektivs der zumindest zwei Antriebseinheiten bestimmt wird.

7. Verfahren nach einem der Ansprüche 1 bis 6, **dadurch gekennzeichnet, dass** von der Bestimmungseinheit (4) für die jeweilige Antriebseinheit der Verschleißparameter (5) für jeden Zahn des jeweiligen Antriebszahnrads (3) bestimmt wird.

8. Getriebeeinheit umfassend eine Regelungseinheit (2) zur Ansteuerung eines Getriebezahnrads (1) der Getriebeeinheit, zumindest zwei Antriebseinheiten und eine der jeweiligen Antriebseinheit zugeordneten Bestimmungseinheit (4), wobei zumindest die zwei Antriebseinheiten mit jeweils wenigstens einem Antriebszahnrad (3) in das Getriebezahnrad (1) eingreifen, wobei jede der zumindest zwei Antriebseinheiten zumindest einen mit dem Antriebszahnrad (3) wirkverbundenen Motor umfasst, **dadurch gekennzeichnet, dass** jeder der zumindest zwei Antriebseinheiten jeweils eine der Bestimmungseinheiten (4) zugeordnet ist, und dass die Regelungseinheit (2) ausgebildet ist, die Antriebseinheiten nach einem Verfahren nach einem der Ansprüche 1 bis 7 zu betreiben.

## Claims

1. Method for controlling a gear wheel (1), wherein at least two drive units, each with at least one drive gear (3), engage in the gear wheel (1), wherein each of the at least two drive units has at least one motor connected to the drive gear (3) of the gear wheel (1) and at least one drive gear (3) connected to the gear wheel (1), wherein each of the at least two drive units is assigned a respective determination unit (4), wherein a wear parameter (5) is determined by each of the determining units (4) for the respective drive unit, taking into account at least one wear parameter (5) occurring prior in time, wherein a control unit (2) generates an individual motor command (6) for each motor of the at least two drive units, taking into account the determined wear parameters (5), each of these individual motor commands (6) being output on the output side to the respective motor of the at least two drive units, the gear wheel (1) being driven by the respective motors on the basis of the individual motor commands (6).

2. Method according to claim 1, **characterised in that** each of the at least two drive units comprises at least one sensor, wherein the gear gear backlash value the respective drive gear (3) and the gear wheel (1) is measured, wherein the wear parameter (5) is determined by the determining unit (4) for the respective drive gear, taking into account the gear backlash value.

3. Method according to claim 2, **characterised in that** the determining unit (4) determines the wear parameter (5) for the respective drive gear, taking into account at least one additional gear backlash value that occurred earlier.

4. Method according to one of claims 1 to 3, **characterised in that** the determining unit (4) determines the wear parameter (5) for the respective drive gear, taking into account at least one performance characteristic of the respective motor.

5. Method according to claim 4, **characterised in that** the determining unit (4) determines the wear parameters (5) for the respective drive gear, taking into account at least one additional performance characteristic of the respective motor that occurred prior to the determination.

6. Method according to one of claims 1 to 5, **characterised in that** the determining unit (4) determines the wear parameters (5) for the respective drive gear, taking into account at least one load collective of the at least two drive gears.

7. Method according to one of claims 1 to 6, **characterised in that** the determining unit (4) determines the wear parameters (5) for each tooth of the respective drive gear (3) for the respective drive gear unit.

8. Gear unit comprising a control unit (2) for controlling a gear wheel (1) of the gear unit, at least two drive units and a determining unit (4) assigned to the respective drive unit, wherein at least the two drive units each engage with at least one drive gear wheel (3) in the gear wheel (1), wherein each of the at least two drive units comprises at least one motor operatively connected to the drive gear wheel (3), **characterised in that** each of the at least two drive units is assigned one of the determining units (4), and **in that** the control unit (2) is embodied to operate the drive units according to a method according to one of claims 1 to 7.

## Revendications

1. Procédé de commande d'une roue dentée (1), dans lequel au moins deux unités d'entraînement, chacune avec au moins un engrenage d'entraînement (3), s'engagent dans la roue dentée (1), dans lequel chacune des au moins deux unités d'entraînement a au moins un moteur connecté à l'engrenage d'entraînement (3) de la roue dentée (1) et au moins un engrenage d'entraînement (3) connecté à la roue dentée (1), dans lequel chacune des au moins deux unités d'entraînement est affectée à une unité de détermination (4) respective, dans lequel un paramètre d'usure (5) est déterminé par chacune des unités de détermination (4) pour l'unité d'entraînement respective, en tenant compte d'au moins un paramètre d'usure (5) survenant antérieurement dans le temps, dans lequel une unité de commande (2) génère une commande de moteur individuelle (6) pour chaque moteur des deux unités d'entraînement au moins, en tenant compte des paramètres d'usure déterminés (5), chacune de ces commandes de moteur individuelles (6) étant émise du côté de la sortie vers le moteur respectif des deux unités d'entraînement au moins, la roue dentée (1) étant entraînée par les moteurs respectifs sur la base des commandes de moteur individuelles (6).

2. Procédé selon la revendication 1, **caractérisé par le fait que** chacune des au moins deux unités d'entraînement comprend au moins un capteur, dans lequel la valeur du jeu de l'engrenage de l'engrenage d'entraînement (3) respectif et de la roue dentée (1) est mesurée, dans lequel le paramètre d'usure (5) est déterminé par l'unité de détermination (4) pour l'engrenage d'entraînement respectif, en tenant compte de la valeur du jeu de l'engrenage.

3. Procédé selon la revendication 2, **caractérisé par le fait que** l'unité de détermination (4) détermine le paramètre d'usure (5) pour l'engrenage d'entraînement respectif, en tenant compte d'au moins une valeur supplémentaire de jeu de l'engrenage qui s'est produite précédemment.

4. Procédé selon l'une des revendications 1 à 3, **caractérisé en ce que** l'unité de détermination (4) détermine le paramètre d'usure (5) pour l'engrenage d'entraînement respectif, en tenant compte d'au moins une caractéristique de performance du moteur respectif.

5. Procédé selon la revendication 4, **caractérisé en ce que** l'unité de détermination (4) détermine les paramètres d'usure (5) pour l'engrenage d'entraînement respectif, en tenant compte d'au moins une caractéristique de performance supplémentaire du moteur respectif qui s'est produite avant la détermination.

6. Procédé selon l'une des revendications 1 à 5, **caractérisé en ce que** l'unité de détermination (4) détermine les paramètres d'usure (5) pour l'engrenage d'entraînement respectif, en tenant compte d'au moins une charge collective des au moins deux engrenages d'entraînement.

7. Procédé selon l'une des revendications 1 à 6, **caractérisé en ce que** l'unité de détermination (4) détermine les paramètres d'usure (5) pour chaque dent de l'engrenage d'entraînement (3) respectif pour le groupe d'engrenages d'entraînement respectif.

8. Réducteur comprenant une unité de commande (2) pour commander une roue dentée (1) du réducteur, au moins deux unités d'entraînement et une unité de détermination (4) affectée à l'unité d'entraînement respective, dans laquelle au moins les deux unités d'entraînement s'engagent chacune avec au moins une roue dentée d'entraînement (3) dans la roue dentée (1), dans laquelle chacune des deux unités d'entraînement au moins comprend au moins un moteur relié de manière opérationnelle à la roue dentée d'entraînement (3), **caractérisée par le fait que** chacune des deux unités d'entraînement au moins est associée à l'une des unités de détermination (4), et **par le fait que** l'unité de commande (2) est conçue pour faire fonctionner les unités d'entraînement selon un procédé conforme à l'une des revendications 1 à 7.
